# EUROPÄISCHE PATENTSCHRIFT

(11) **EP 2 429 795 B1**
(45) Veröffentlichungstag und Bekanntmachung des Hinweises auf die Patenterteilung: **16.10.2013**
(21) Anmeldenummer: 10718052.3
(22) Anmeldetag: 29.03.2010
(51) Int. Cl.: B29C 49/42, B29C 49/36, B65G 47/84, B29C 49/12, B29C 49/16

(54) **VERFAHREN UND VORRICHTUNG ZUR BLASFORMUNG SOWIE ZUM BEFÜLLEN VON BEHÄLTERN**
METHOD AND APPARATUS FOR BLOW MOLDING AND FOR FILLING CONTAINERS
PROCÉDÉ ET DISPOSITIF POUR LE MOULAGE PAR SOUFFLAGE ET LE REMPLISSAGE DE RÉCIPIENTS

(30) Priorität: 11.05.2009 DE 102009021277
(43) Veröffentlichungstag der Anmeldung: 21.03.2012
(73) Patentinhaber: KHS Corpoplast GmbH, 22145 Hamburg (DE)
(72) Erfinder: KLATT, Dieter, 22147 Hamburg (DE); JENZEN, Dieter, 25436 Uetersen (DE); MEYER, Jan Fabian, 22305 Hamburg (DE)
(74) Vertreter: Hausfeld, Norbert
(86) Internationale Anmeldenummer: PCT/DE2010/000388
(87) Internationale Veröffentlichungsnummer: WO 2010/130236

(56) Entgegenhaltungen:
- EP-A1- 1 350 612
- DE-A1-102006 023 531
- US-A- 5 863 571

## Beschreibung

Die Erfindung betrifft ein Verfahren zur Blasformung sowie zum Befüllen von Behältern, bei dem ein vorformling zunächst thermisch konditioniert und anschließend innerhalb einer Blasform durch Blasdruckeinwirkung in den Behälter umgeformt wird sowie bei dem die geblasenen Behälter mindestens entlang eines Teiles ihres Transportweges von einem Tragelement positioniert werden, das von einem rotierenden Übergaberad gehalten ist, und wobei das Übergaberad wenigstens einen Teil einer Kopplung zwischen einem Blasmodul zur Behälterherstellung und einem Füllmodul zur Behälterbefüllung bereitstellt.

Die Erfindung betrifft darüber hinaus eine Vorrichtung zur Blasformung sowie zum Befüllen von Behältern, die mindestens eine Blasstation mit einer Blasform und mindestens ein Tragelement zur Positionierung von geblasenen Behältern entlang eines Transportweges aufweist, wobei das Tragelement von einem rotierenden Übergaberad gehalten ist, und wobei das Übergaberad wenigstens einen Teil einer Kopplung zwischen einem Blasmodul zur Behälterherstellung und einem Füllmodul zur Behälterbefüllung ausbildet.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine An-wendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Handhabung der Vorformlinge und zur Handhabung der geblasenen Behälter werden innerhalb der Blasmaschine häufig sogenannte Übergaberäder verwendet, die mit Tragelementen für die Vorformlinge oder Flaschen ausgestattet sind. Die Tragelemente können hierbei entweder direkt auf die Vorformlinge oder Flaschen zugreifen, oder separate Transportelemente befördern, die ihrerseits direkt die Vorformlinge oder Flaschen haltern. Zur Unterstützung von Übergabevorgängen sind die Tragelemente relativ zum Übergaberad typischerweise verschwenkbar gelagert. Zusätzlich ist häufig auch eine Teleskopierbarkeit realisiert. Zur Positionsvorgabe für die Tragelemente werden Kurvensteuerungen verwendet. Die Tragelemente werden hierzu mit Kurvenrollen an ortsfest angeordneten Kurven vorbeigeführt.

Das bereits erwähnte Blasmodul umfasst im Wesentlichen ein rotationsfähiges Blasrad mit Blasstationen, das Füllmodul umfaßt im Wesentlichen ein rotationsfähiges Füllrad mit Füllstationen.

Rotierende Übergaberäder mit Tragelementen werden ebenfalls verwendet, um bei sogenannten Blockmaschinen ein Blasmodul mit einem Füllmodul zu koppeln. Bei derartigen verblockten Anordnungen besteht ein Problem darin, dass durch das Füllmodul eine maximale Befüllmenge je Zeiteinheit vorgegeben ist. Wird beispielsweise eine Blasmaschine zur Herstellung von Behältern mit einem Volumen von 0,5 Liter mit einem Füllmodul gekoppelt und beide Module hinsichtlich ihrer Leistungsfähigkeit unter Berücksichtigung dieser Randbedingungen ausgewählt, so ist es nicht ohne weiteres möglich, die Blasmaschine auf die Produktion von Behältern mit einem Volumen von einem Liter umzurüsten und durch das Füllmodul diese größeren Behälter mit einer gleichen Anzahl von Behältern je Zeiteinheit füllen zu lassen.

Ebenfalls ist es bei diesem Beispiel nicht ohne weiteres möglich, das Blasrad der Blasmaschine einfach langsamer laufen zu lassen, da bei kurvengesteuerten Blasmaschinen häufig prozeßtechnische Parameter, beispielsweise die Reckgeschwindigkeit, von der Rotation des Blasrades abgeleitet werden und nicht in einfacher Weise variiert werden können. Eine Abstimmung der Leistungsfähigkeit des Blasmoduls und des Füllmoduls aufeinander bei der Verarbeitung von Behältern mit relativ zueinander unterschiedlichen Volumen bereitet somit Schwierigkeiten.

In der gattungsbildenden EP 1350612 A1 wird ein Übergaberad mit teleskopierbaren Tragarmen beschrieben. Durch ein Zurückziehen der Tragarme kann die Durchführung von Übergabevorgängen verhindert werden.

In der DE 10 2006 023 531 A1 wird ein Übergaberad mit mehreren Transportarmen beschrieben, wobei die Transportarme unabhängig voneinander steuerbar sind.

In der US 5,863,571 wird ein Übergaberad mit verschwenkbaren und teleskopierbaren Übergabearmen beschrieben.

Aufgabe der vorliegenden Erfindung ist es daher, ein Verfahren der einleitend genannten Art derart zu verbessern, dass bei einfachem mechanischen Aufbau eine Herstellung und Befüllung von unterschiedlich großen Behältern unterstützt wird.

Diese Aufgabe wird erfindungsgemäß dadurch gelöst, dass die Anzahl der Tragelemente im Bereich des Übergaberades in Abhängigkeit von einer Produktionsgeschwindigkeit verändert wird.

Insbesondere ist vorgesehen, dass in einer Transportrichtung der Behälter vor dem Übergaberad ein Ausgaberad des Blasmoduls und in dieser Transportrichtung hinter dem Übergaberad ein Eingaberad des Füllmoduls jeweils mit Tragelementen für die Behälter ausgestattet werden.

Weitere Aufgabe der vorliegenden Erfindung ist es, eine Vorrichtung der einleitend genannten Art derart zu konstruieren, dass bei einfachem konstruktiven Aufwand eine Herstellung und Befüllung von unterschiedlich großen Behältern unterstützt wird.

Diese Aufgabe wird erfindungsgemäß dadurch gelöst, dass die Anzahl der Tragelemente im Bereich des Übergaberades in Abhängigkeit von einer Produktionsgeschwindigkeit veränderbar ist.

Insbesondere ist vorgesehen, daß in einer Transportrichtung der Behälter vor dem Übergaberad ein Ausgaberad des Blasmoduls und in dieser Transportrichtung hinter dem Übergaberad ein Eingaberad des Füllmoduls jeweils mit Tragelementen für die Behälter ausgestattet sind.

Durch die Anordnung des Übergaberades mit der veränderlichen Anzahl von Tragelementen zwischen dem Blasmodul und dem Füllmodul ist es möglich, das Blasmodul derart zu betreiben, daß nicht in jeder verwendeten Blasstation auch Behälter geblasen werden. Beispielsweise ist es möglich, lediglich jede zweite Blasstation mit Blasformen auszustatten und auch nur in jeder zweiten Blasstation eine Behälterherstellung durchzuführen. Das Übergaberad übernimmt hierdurch beispielsweise nur von jedem zweiten Tragelement des Ausgaberades des Blasmoduls einen geblasenen Behälter und übergibt diese Behälter lückenlos an die entsprechenden Transportelemente des Eingaberades des Füllmoduls.

Beim einleitend bereits genannten Beispiel einer Produktionsumstellung von Behältern mit einem Füllvolumen von 0,5 Liter auf Behälter mit einem Füllvolumen von 1 Liter werden die Transportelemente im Bereich des Füllmoduls mit einer halbierten Transportgeschwindigkeit betrieben, um ausreichend Zeit für eine Befüllung der Behälter mit der in diesem Fall doppelten Füllmenge bereitzustellen. Im Bereich des Blasmoduls kann hingegen das Blasrad mit der weiterhin gleichen Geschwindigkeit rotieren und hierdurch eine Einhaltung der prozeßtechnischen Parameter sicherstellen. Das Übergaberad gleicht somit die Lücken in der Abfolge der Behälter, die vom Blasmodul bereitgestellt werden, aus und sorgt für eine lückenlose Anordnung der Behälter im Bereich des Füllmoduls.

Wie bereits erwähnt, kann das Übergaberad mit der veränderlichen Anzahl von Tragelementen, beispielsweise einer veränderlichen Anzahl von Zangen oder einer veränderlichen Anzahl von Tragarmen, zwischen einem Ausgaberad des Blasmoduls und einem Eingaberad des Füllmoduls angeordnet sein. Es ist aber auch möglich, das Übergaberad an anderen Stellen des Transportweges der Behälter anzuordnen, der sich vom Blasrad bis zum Füllrad erstreckt. Insbesondere kann das Übergaberad auch in der Füllmaschine angeordnet werden und beispielsweise die Behälter direkt an das Füllrad übergeben.

Zur definierten Durchführung von Übergabevorgängen ist vorgesehen, daß das Tragelement relativ zum Übergaberad bei einer Rotation des Übergaberades bewegt wird.

Insbesondere erweist es sich als vorteilhaft, daß das Tragelement relativ zum Übergaberad verschwenkt wird.

Darüber hinaus ist es auch möglich, daß das Tragelement relativ zum Übergaberad teleskopiert wird.

Eine exakte Reproduzierbarkeit der durchgeführten Bewegungen läßt sich dadurch bereitstellen, daß das Tragelement von einer Kurvensteuerung relativ zum Übergaberad positioniert wird.

Zur Anpassung der Bewegungsbahnen der Tragelemente an unterschiedliche Anzahlen von Tragelementen im Bereich des Übergaberades ist vorgesehen, daß bei unterschiedlichen Produktionsgeschwindigkeiten unterschiedliche Steuerkurven für die Tragelemente verwendet werden. Die jeweiligen Steuerkurven gewährleisten, daß auch bei unterschiedlichen Anzahlen von Tragelementen im Bereich des Übergaberades und hieraus resultierenden unterschiedlichen Abständen der Tragelemente relativ zueinander die jeweiligen Übergaben zuverlässig durchgeführt werden.

Ein kontinuierlicher Bewegungsablauf wird dadurch unterstützt, daß bei einer Halbierung der Produktionsgeschwindigkeit die Anzahl der Tragelemente im Bereich des Übergaberades halbiert wird.

Eine andere Positioniermöglichkeit besteht darin, daß das Tragelement von einem Servomotor positioniert wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung eines zwischen einem Ausgaberad und einem Eingaberad angeordneten Übergaberades mit vollständiger Bestückung an Tragelementen für die geblasenen Behälter und
- Fig. 6: die Anordnung gemäß Fig. 5 nach einem Entfernen jedes zweiten Tragelementes im Bereich des Übergaberades.

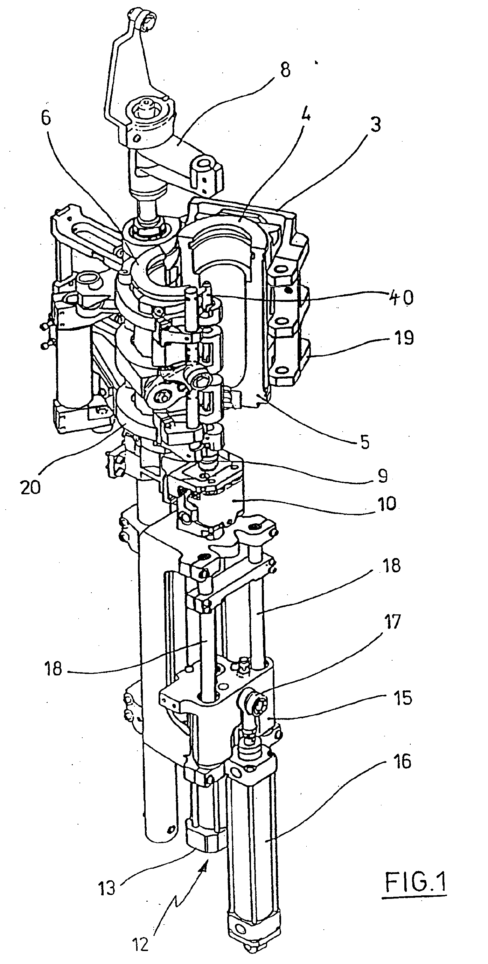

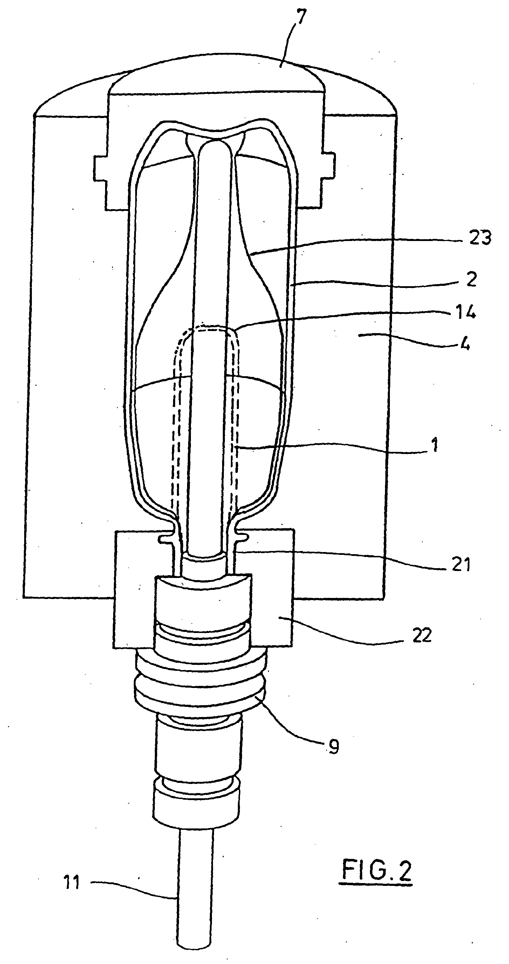

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Tränsportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

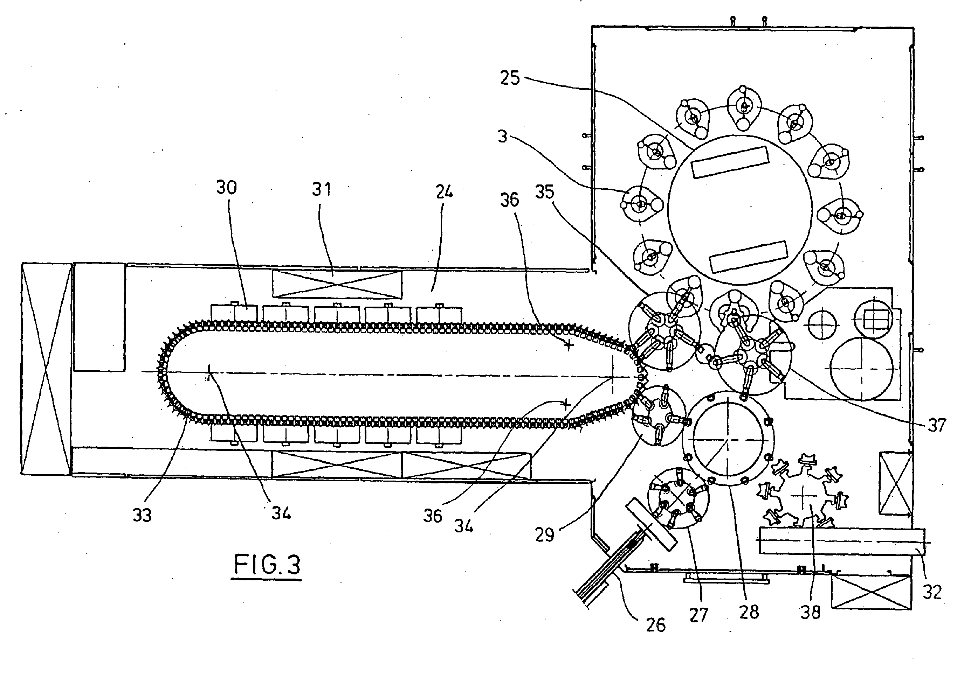

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

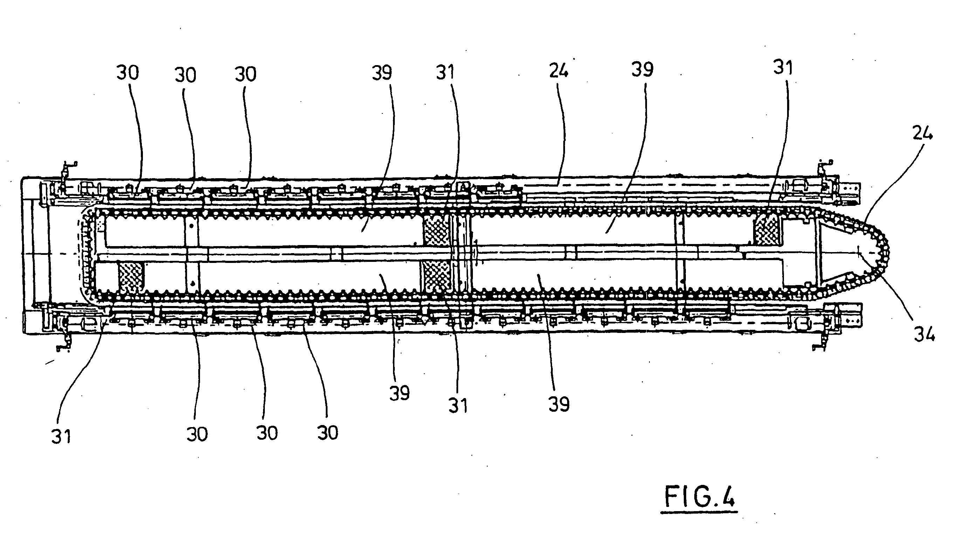

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

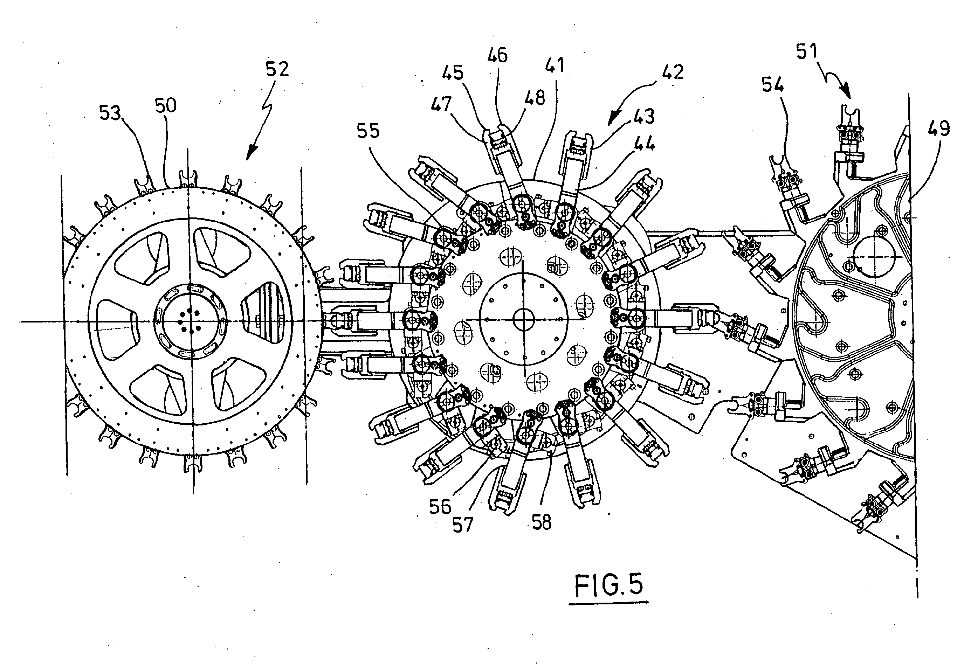

Fig. 5 zeigt ein Übergaberad (41), das mit Tragelementen (42) versehen, die zur Handhabung von Behältern (2) dienen. Beim dargestellten Ausführungsbeispiel ist das Tragelement (42) aus einem Handhabungselement (43) und einem Tragarm (44) ausgebildet. Das Handhabungselement (43) ist beim dargestellten Ausführungsbeispiel zangenartig realisiert und weist zwei Zangenarme (45, 46) auf, die relativ zu Drehachsen (47, 48) verschwenkbar vom Tragarm (44) gehalten sind. Derartige Handhabungselemente (43) ergreifen die Behälter (2) direkt. Die Handhabungselemente (43) können aber auch derart realisiert sein, daß ein Kontakt mit Transportelementen vorgesehen ist, die ihrerseits die Vorformlinge (1) oder Behälter (2) tragen. Ein derartiges Transportelement kann beispielsweise als Transportdorn (9) realisiert sein.

Das Übergaberad (41) ist zwischen einem Ausgaberad (49) und einem Eingaberad (50) angeordnet. Das Ausgaberad (49) ist einem Blasmodul (51) und das Eingaberad (50) einem Füllmodul (52) zugeordnet. Das Eingaberad (50) weist eine Mehrzahl von Tragelementen (53) und das Ausgaberad (49) eine Mehrzahl von Tragelementen (54) auf.

Die Tragelemente (42) sind im Bereich des Übergaberades (41) relativ zu Drehachsen (55) verschwenkbar gelagert. Eine Schwenkbewegung der Tragelemente (42) wird unter Verwendung von Kurvenrollen (56) vorgegeben, die entlang einer Kurvenbahn (57) geführt sind. Die Kurvenrollen (56) können beispielsweise im Bereich eines Querarmes (58) der Tragarme (44) angeordnet sein, um in einfacher Weise Schwenkbewegungen vorzugeben.

Fig. 5 zeigt eine Ausführungsform, bei der eine maximale Anzahl von Tragelementen (42) im Bereich des Übergaberades (41) angeordnet ist. Bei einer Rotation des Ausgaberades (49), der Übergaberades (41) und des Eingaberades (50) übergibt hierbei jedes Tragelement (54) des Ausgaberades (49) einen geblasenen Behälter an ein Tragelement (42) des Übergaberades (41) und jedes Tragelement (42) des Übergaberades (41) übergibt einen Behälter an ein Tragelement (50) des Eingaberades (50). Dieser Betriebszustand entspricht einer konstruktiv vorgegebenen maximalen Auslastung sowohl des Blasmoduls (51) als auch des Füllmoduls (52).

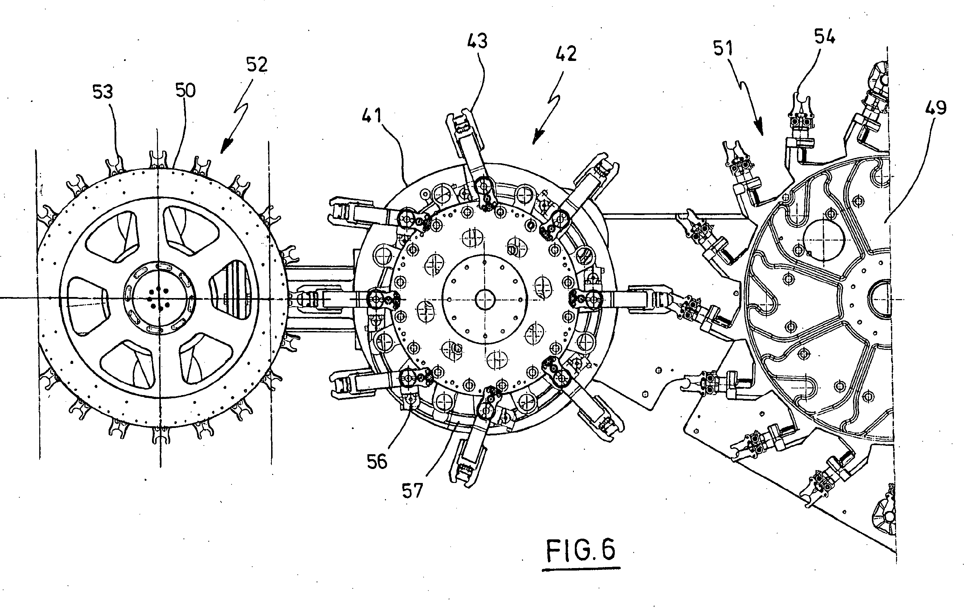

Fig. 6 zeigt einen Betriebszustand, bei der die Anzahl der Tragelemente (42) im Bereich des Übergaberades (41) gegenüber der Darstellung in Fig. 5 halbiert ist. Es wurde jedes zweite Tragelement (42) weggelassen. Das Ausgaberad (49) rotiert in diesem Betriebszustand mit der gleichen Drehzahl wie gemäß Fig. 5, allerdings transportiert nur jedes zweite Tragelement (54) einen geblasenen Behälter. Durch eine entsprechende Modifizierung der Kurvenbahn (57) wird eine Schwenkbewegung der Tragelemente (42) derart vorgegeben, daß bei einer gegenüber der Ausführungsform in Fig. 5 halbierten Drehzahl des Eingaberades (50) jedes Tragelement (53) des Eingaberades (50) mit einem Behälter beladen wird. Im Bereich des Füllmoduls (52) kann hierdurch eine lückenlose Abfolge von Behältern gewährleistet werden.

## Patentansprüche

1. Verfahren zur Blasformung sowie zum Befüllen von Behältern (2), bei dem ein vorformling (1) zunächst thermisch konditioniert und anschließend innerhalb einer Blasform (4)durch Blasdruckeinwirkung in den Behälter (2) umgeformt wird sowie bei dem die geblasenen Behälter (2) mindestens entlang eines Teiles ihres Transportweges von einem Tragelement (42) positioniert werden, das von einem rotierendem Übergaberad (41) gehalten ist, und wobei das Übergaberad (41) mindestens einen Teil einer Kopplung zwischen einem Blasmodul zur Behälterherstellung und einem Füllmodul zur Behälterbefüllung bereitstellt, **dadurch gekennzeichnet, dass** die Anzahl der Tragelemente (42) im Bereich des Übergaberades (41) in Abhängigkeit von einer Produktionsgeschwindigkeit verändert wird.

2. Verfahren nach Anspruch 1, **dadurch gekennzeichnet, dass** in einer Transportrichtung der Behälter (2) vor dem Übergaberad (41) ein Ausgaberad (49) des Blasmoduls (51) und in dieser Transportrichtung hinter dem Übergaberad (41) ein Eingaberad (50) des Füllmoduls (52) jeweils mit Tragelementen (53, 54) für die Behälter (2) ausgestattet werden.

3. Verfahren nach Anspruch 1 oder 2, **dadurch gekennzeichnet, dass** das Tragelement (42) relativ zum Übergaberad (41) bei einer Rotation des Übergaberades (41) bewegt wird.

4. Verfahren nach einem der Ansprüche 1 bis 3, **dadurch gekennzeichnet, dass** das Tragelement (42) relativ zum Übergaberad (41) verschwenkt wird.

5. Verfahren nach einem der Ansprüche 1 bis 3, **dadurch gekennzeichnet, dass** das Tragelement (42) relativ zum Übergaberad (41) teleskopiert wird.

6. Verfahren nach einem der Ansprüche 1 bis 5, **dadurch gekennzeichnet, dass** das Tragelement (42) von einer Kurvensteuerung relativ zum Übergaberad (41) positioniert wird.

7. Verfahren nach einem der Ansprüche 1 bis 6, **dadurch gekennzeichnet, dass** bei unterschiedlichen Produktionsgeschwindigkeiten unterschiedliche Steuerkurven für die Tragelemente (42) verwendet werden.

8. Verfahren nach einem der Ansprüche 1 bis 7, **dadurch gekennzeichnet, dass** bei einer Halbierung der Produktionsgeschwindigkeit die Anzahl der Tragelemente (42) im Bereich des Übergaberades (41) halbiert wird.

9. Verfahren nach einem der Ansprüche 1 bis 5, **dadurch gekennzeichnet, dass** das Tragelement (42) von einem Servomotor positioniert wird.

10. Vorrichtung zur Blasformung sowie zum Befüllen von Behältern (1), die mindestens eine Blasstation (3) mit einer Blasform (4) und mindestens ein Tragelement zur Positionierung von geblasenen Behältern entlang eines Transportweges aufweist, wobei das Tragelement (42) von einem rotierenden Übergaberad (41) gehalten ist, und wobei das Übergaberad (41) wenigstens eine Teil einer Kopplung zwischen einem Blasmodul zur Behälterherstellung und einem Füllmodul zur Behälterbefüllung bereitstellt, **dadurch gekennzeichnet, dass** die Anzahl der Tragelemente (42) im Bereich des Übergaberades (41) in Abhängigkeit von einer Produktionsgeschwindigkeit derart veränderbar ist und dass bei einer Halbierung der Anzahl der Tragelemente (42) im Bereich des Übergaberades (41) jedes zweite Tragelement (42) entfernt ist.

11. Vorrichtung nach Anspruch 10, **dadurch gekennzeichnet, dass** in einer Transportrichtung der Behälter (2) vor dem Übergaberad (41) ein Ausgaberad (49) des Blasmoduls (51) und in dieser Transportrichtung hinter dem Übergaberad (41) ein Eingaberad (50) des Füllmoduls (52) jeweils mit Tragelementen (53, 54) für die Behälter (2) ausgestattet sind.

12. Vorrichtung nach Anspruch 10 oder 11, **dadurch gekennzeichnet, dass** das Tragelement (42) relativ zum Übergaberad (41) beweglich angeordnet ist.

13. Vorrichtung nach einem der Ansprüche 10 bis 12, **dadurch gekennzeichnet, dass** das Tragelement (42) relativ zum Übergaberad (41) verschwenkbar angeordnet ist.

14. Vorrichtung nach einem der Ansprüche 10 bis 12, **dadurch gekennzeichnet, dass** das Tragelement (42) relativ zum Übergaberad (41) teleskopierbar angeordnet ist.

15. Vorrichtung nach einem der Ansprüche 10 bis 14 **dadurch gekennzeichnet, dass** das Tragelement (42) relativ zum Übergaberad (41) von einer Kurvensteuerung positionierbar ist.

16. Vorrichtung nach einem der Ansprüche 10 bis 15, **dadurch gekennzeichnet, dass** eine Kurvenbahn (57) der Kurvensteuerung zur Anpassung an unterschiedliche Produktionsgeschwindigkeiten austauschbar im Bereich des Übergaberades (41) angeordnet ist.

17. Vorrichtung nach einem der Ansprüche 10 bis 16, **dadurch gekennzeichnet, dass** zur Positionierung des Tragelementes ein Servomotor verwendet ist.

## Claims

1. A method for the blow moulding and filling of containers (2) wherein a preform (1), after having been conditioned thermally, is moulded in a blow mould (4) by the action of blowing pressure to form the container (2) and wherein the blow moulded containers (2) are positioned by a carrying element (42) at least along a part of their transport path, said carrying element (42) being held by a rotating transfer wheel (41), and wherein the transfer wheel (41) provides at least a part of a coupling between a blowing module for making the containers and a filling module for filling the containers, **characterised in that** the number of carrying elements (42) in the vicinity of the transfer wheel (41) is changed in relation to a production rate.

2. The method according to Claim 1, **characterised in that** an output wheel (49) of the blowing module (51) arranged upstream of the transfer wheel (41) as seen in a transport direction of the containers (2) and an input wheel (50) of the filling module (52) arranged downstream of the transfer wheel (41) as seen in this transport direction are each equipped with carrying elements (53, 54) for the containers (2).

3. The method according to Claim 1 or 2, **characterised in that** the carrying element (42) is moved relative to the transfer wheel (41) during a rotation of the transfer wheel (41).

4. The method according to any one of Claims 1 to 3, **characterised in that** the carrying element (42) is swivelled relative to the transfer wheel (41).

5. The method according to any one of Claims 1 to 3, **characterised in that** the carrying element (42) is telescoped relative to the transfer wheel (41).

6. The method according to any one of Claims 1 to 5, **characterised in that** the carrying element (42) is positioned by a cam control relative to the transfer wheel (41).

7. The method according to any one of Claims 1 to 6, **characterised in that** different control cams are used for the carrying elements (42) with varying production rates.

8. The method according to any one of Claims 1 to 7, **characterised in that** the number of carrying elements (42) in the vicinity of the transfer wheel (41) is divided in half when the production rate is divided in half.

9. The method according to any one of Claims 1 to 5, **characterised in that** the carrying element (42) is positioned by a servo motor.

10. A device for the blow moulding and filling of containers (1), comprising at least one blowing station (3) with a blow mould (4) and at least one carrying element for positioning blow moulded containers along a transport path, wherein the carrying element (42) is held by a rotating transfer wheel (41), and wherein the transfer wheel (41) provides at least a part of a coupling between a blowing module for making the containers and a filling module for filling the containers, **characterised in that** the number of carrying elements (42) in the vicinity of the transfer wheel (41) can be changed in relation to a production rate and that every second carrying element (42) is removed when the number of carrying elements (42) in the vicinity of the transfer wheel (41) is divided in half.

11. The device according to Claim 10, **characterised in that** an output wheel (49) of the blowing module (51) arranged upstream of the transfer wheel (41) as seen in a transport direction of the containers (2) and an input wheel (50) of the filling module (52) arranged downstream of the transfer wheel (41) as seen in this transport direction are each equipped with carrying elements (53, 54) for the containers (2).

12. The device according to Claim 10 or 11, **characterised in that** the carrying element (42) is arranged such that it can be moved relative to the transfer wheel (41).

13. The device according to any one of Claims 10 to 12, **characterised in that** the carrying element (42) is arranged such that it can be swivelled relative to the transfer wheel (41).

14. The device according to any one of Claims 10 to 12, **characterised in that** the carrying element (42) is arranged such that it can be telescoped relative to the transfer wheel (41).

15. The device according to any one of Claims 10 to 14, **characterised in that** the carrying element (42) can be positioned by a cam control relative to the transfer wheel (41).

16. The device according to any one of Claims 10 to 15, **characterised in that** a cam track (57) of the cam control is arranged in the vicinity of the transfer wheel (41) such that it can be exchanged for adjustment to different production rates.

17. The device according to any one of Claims 10 to 16, **characterised in that** a servo motor is used for positioning the carrying element.

## Revendications

1. Procédé de moulage par soufflage et de remplissage de récipients (2) dans le cadre duquel une préforme (1) est tout d'abord soumise à un un conditionnement thermique puis est transformée à l'intérieur d'un moule de soufflage (4) en récipient (2) sous l'action d'une pression de soufflage, et dans le cadre duquel les récipient moulés (2) sont, le long d'une partie au moins de leur parcours, positionnés par un élément porteur (42) maintenu par une roue de transfert (41) en rotation, la roue de transfert (41) mettant à disposition une partie au moins d'un accouplement entre un module de soufflage qui produit les récipients et un module de remplissage qui les remplit, **caractérisé en ce que** le nombre d'éléments porteurs (42) au niveau de la roue de transfert (41) est modifié en fonction d'une vitesse de production.

2. Procédé selon la revendication 1, **caractérisé en ce que,** dans une direction de transport des récipients (2) devant la roue de transfert (41), une roue de sortie (49) du module de soufflage (51) et, dans cette direction de transport derrière le roue de transfert (41), une roue d'introduction (50) du module de remplissage (52) sont respectivement dotées d'éléments porteurs (53, 54) pour les récipients (2).

3. Procédé selon la revendication 1 ou 2, **caractérisé en ce que,** lors d'une rotation de la roue de transfert (41), l'élément porteur (42) est déplacé par rapport à la roue de transfert (41).

4. Procédé selon l'une des revendications 1 à 3, **caractérisé en ce que** l'élément porteur (42) est pivoté par rapport à la roue de transfert (41).

5. Procédé selon l'une des revendications 1 à 3, **caractérisé en ce que** l'élément porteur (42) est télescopé par rapport à la roue de transfert (41).

6. Procédé selon l'une des revendications 1 à 5, **caractérisé en ce que** l'élément porteur (42) est positionné par rapport à la roue de transfert (41) par une commande à came.

7. Procédé selon l'une des revendications 1 à 6, **caractérisé en ce que** différentes cames de commande sont utilisées pour les éléments porteurs (42) pour opérer à différentes vitesses de production.

8. Procédé selon l'une des revendications 1 à 7, **caractérisé en ce que** le nombre d'éléments porteurs (42) au niveau de la roue de transfert (41) est réduit de moitié lorsque la vitesse de production est réduite de moitié.

9. Procédé selon l'une des revendications 1 à 5, **caractérisé en ce que** l'élément porteur (42) est positionné par un servomoteur.

10. Dispositif de moulage par soufflage et de remplissage de récipients (1) présentant au moins une station de soufflage (3) avec un moule de soufflage (4) et au moins un élément porteur assurant le positionnement des récipients moulés le long d'un parcours, l'élément porteur (42) étant maintenu par une roue de transfert (41) en rotation et la roue de transfert (41) mettant à disposition une partie au moins d'un accouplement entre un module de soufflage qui produit les récipients et un module de remplissage qui les remplit, **caractérisé en ce que** le nombre d'éléments porteurs (42) au niveau de la roue de transfert (41) peut être modifié en fonction d'une vitesse de production de façon telle que, lorsque le nombre d'éléments porteurs (42) au niveau de la roue de transfert (41) est réduit de moitié, chaque deuxième élément porteur (42) est retiré.

11. Dispositif selon la revendication 10, **caractérisé en ce que,** dans une direction de transport des récipients (2) devant la roue de transfert (41), une roue de sortie (49) du module de soufflage (51) et, dans cette direction de transport derrière la roue de transfert (41), une roue d'introduction (50) du module de remplissage (52) sont respectivement dotées d'éléments porteurs (53, 54) pour les récipients (2).

12. Dispositif selon la revendication 10 ou 11, **caractérisé en ce que** l'élément porteur (42) est disposé de façon à pouvoir être déplacé par rapport à la roue de transfert (41).

13. Dispositif selon l'une des revendications 10 à 12, **caractérisé en ce que** l'élément porteur (42) est disposé de façon à pouvoir être pivoté par rapport à la roue de transfert (41).

14. Dispositif selon l'une des revendications 10 à 12, **caractérisé en ce que** l'élément porteur (42) est disposé de façon à pouvoir être télescopé par rapport à la roue de transfert (41).

15. Dispositif selon l'une des revendications 10 à 14, **caractérisé en ce que** l'élément porteur (42) est disposé de façon à pouvoir être positionné par rapport à la roue de transfert (41) par une commande à came.

16. Dispositif selon l'une des revendications 10 bis 15, **caractérisé en ce que,** au niveau de la roue de transfert (41), une piste de came (57) de la commande à came est disposée de façon interchangeable pour adapter le dispositif à différentes vitesses de production.

17. Dispositif selon l'une des revendications 10 à 16, **caractérisé en ce qu**'un servomoteur est utilisé pour le positionnement de l'éléments porteurs.
